# EUROPÄISCHE PATENTANMELDUNG

(11) **EP 0 859 440 A1**
(43) Veröffentlichungstag der Anmeldung: **19.08.1998**
(21) Anmeldenummer: 98102422.7
(22) Anmeldetag: 12.02.1998
(51) Int. Cl.: H02G 3/04, F16L 7/00, F16L 9/06, B60R 16/02

(54) **Kunststoffwellrohr mit einem Längsschlitz**

(30) Priorität: 14.02.1997 DE 19705761
(71) Anmelder: FRÄNKISCHE ROHRWERKE, GEBR. KIRCHNER GmbH & Co., D-97486 Königsberg (DE)
(72) Erfinder: Neubauer, Tilo, 97486 Königsberg (DE); Krauss, Manfred, 97084 Würzburg (DE); Göpfert, Bernd, 96135 Stegaurach (DE)
(74) Vertreter: Schwabe - Sandmair - Marx

(57) **Zusammenfassung**

Die Erfindung betrifft ein Kunststoffwellrohr mit einem Längsschlitz, wobei erfindungsgemäß die einander gegenüberliegenden Randbereiche wenigstens abschnittsweise so ausgebildet sind, daß sie miteinander verbindbar sind.

## Beschreibung

Die Erfindung betrifft ein Kunststoffwellrohr mit einem Längsschlitz bzw. einer in Längsrichtung des Rohres erstreckten, im wesentlichen durchgehenden Öffnung gemäß dem Oberbegriff des Patentanspruchs 1.

Längsgeschlitzte Rohre zur Führung von Kabeln bzw. Kabelbäumen sind für diverse Anwendungen bekanntgeworden. So gibt es beispielsweise ein Doppelrohr, das ein inneres längsgeschlitztes Rohr und ein äußeres längsgeschlitztes Rohr aufweist, die aufeinander aufschnappbar sind. So kann dann, wenn die beiden Teilrohre nicht zusammengesetzt sind, ein Kabel in das Rohr eingelegt werden bzw. diesem entnommen werden. Später wird das Rohr mit dem großen Durchmesser auf das kabelführende Rohr mit dem kleinen Durchmesser aufgeschnappt, so daß der Längsschlitz beider Rohre durch das jeweils andere Rohr verschlossen ist. Diese Art von doppeltem Wellrohr ist jedoch deshalb relativ zu überdenken, weil es zum einen eine große Menge an Kunststoffmaterial erfordert, um diese Rohranordnung herzustellen, und zum anderen läßt diese Rohranordnung bei engen Biegungen Wünsche offen, was insbesondere bei der Kabelverlegung in Automobilen hinderlich werden kann.

Es ist deshalb eine Aufgabe der vorliegenden Erfindung, ein Kunststoffwellrohr zur Verfügung zu stellen, das den Nachteilen des Standes der Technik soweit als möglich Abhilfe verschafft.

Insbesondere ist es eine Aufgabe der vorliegenden Erfindung, ein Kunststoffwellrohr der eingangs genannten Art zur Verfügung zu stellen, in das sich Kabel über den Längsschlitz einsetzen lassen, wobei der Längsschlitz verschließbar ist, ohne daß das Wellrohr übermäßig versteift wird und der Längsschlitz auch bei engsten Biegeradien geschlossen bleibt und das Rohr sich somit fast wie ein geschlossenes Rohr verhält. Es ist einteilig und zweiteilig.

Diese Aufgabe wird durch ein Kunststoffwellrohr mit den im Patentanspruch 1 aufgeführten Merkmalen gelöst.

Zweckmäßige Ausführungsformen des erfindungsgemäßen Kunststoffwellrohres lassen sich den Unteransprüchen entnehmen.

Die gemäß der Erfindung zu erzielenden Vorteile beruhen darauf, daß an dem Längsschlitz einander gegenüberliegende Randbereiche des Kunststoffwellrohres wenigstens abschnittsweise so ausgebildet sind, daß sie miteinander verbindbar sind. Dadurch, daß Verbindungseinrichtungen zur festen Verbindung der Randbereiche entlang des Längsschlitzes nur stellenweise oder abschnittsweise vorgesehen sind, weist das erfindungsgemäße Wellrohr im Vergleich mit bekannten Wellrohren der gleichen Art eine überraschend hohe Flexibilität auf.

Um die gegenüberliegenden Randbereiche miteinander in Eingriff bringen zu können, weisen vorteilhafterweise wenigstens einige Wellungen eines Randbereiches in diesem im Querschnitt gesehen eine andere Form auf als die des gegenüberliegenden Randbereiches. Dabei passen die Wellungen des einen Randbereiches in die Wellungen des anderen Randbereiches, so daß eine Überlappung stattfinden kann. Der Übergang von der Wellenform des einen Randbereiches zu der des anderen Randbereiches kann so ausgebildet sein, daß, nachdem die einander überlappenden Randbereiche miteinander verbunden sind, das Rohr bis auf eine nach außen sichtbare Rille aussieht wie ein herkömmliches Wellrohr.

Besonders vorteilhaft ist es, wenn zwischen den äußeren Wellungen des überlappenden Randbereiches und den innenliegenden Wellungen dieses überlappenden Bereiches ein Spiel verbleibt, so daß, wenn das Rohr in einem engen Radius gebogen werden soll, das Rohr auch am Überlappungsbereich passend gebogen werden kann und keine gegenüber den anderen Bereichen des Rohres in Umfangsrichtung andere Steifigkeit aufweist. Durch das Spiel wird es mit anderen Worten ermöglicht, das Rohr zu biegen, wobei das Material des innenliegenden Randbereiches im Überlappungsbereich einer Verformung des außenliegenden Randbereiches im Überlappungsbereich nicht entgegensteht. Dabei ist es zu bevorzugen, wenn die Wellentäler des außenliegenden Randbereiches die Wellentäler des innenliegenden Randbereiches berühren, während die Wellenberge des innenliegenden Randbereiches die Wellenberge des außenliegenden Randbereiches nach Möglichkeit nicht berühren sollten, um das gewünschte flexible Biegeverhalten zu ermöglichen. Natürlich können umgekehrt auch die Wellenberge in unmittelbarer Berührung zueinander stehen, während die Wellentäler der Randbereiche im Überlappungsbereich zueinander beabstandet sind, wobei wiederum die Flanken der Wellen ebenfalls mit einem Spiel versehen sind, so daß die Randbereiche abermals gegeneinander abgestützt sind, jedoch eine flexible Verformung des Kunststoffwellrohrs mit Merkmalen gemäß der Erfindung gemäß dieser Ausführungsform möglich ist.

Vorteilhafterweise kann im Überlappungsbereich zum nachhaltigen Verschließen des Längsschlitzes eine Verschlußmöglichkeit vorgesehen sein, die bevorzugt wiederum lediglich abschnittsweise ausgebildet sein kann, damit das erfindungsgemäße Kunststoffwellrohr wiederum möglichst flexibel ist. Zu diesem Zweck können die Wellungen in radialer Richtung so ausgebildet sein, daß sie miteinander in einen formschlüssigen Eintritt gelangen können, um das Wellrohr gemäß der Erfindung entlang seinem Längsschlitz dauerhaft schließen zu können. Dabei können die außenliegenden Wellungen im Randbereich beispielsweise verengt, d.h. etwa trichterförmig, in Umfangsrichtung zum Randbereich hin zulaufen, während die innenliegenden Wellungen dazu komplementär ausgebildet sind, so daß eine in Umfangsrichtung auftretende Kraft die miteinander in Eingriff gebrachten Wellungen nicht auseinanderzureißen vermag. Auch hier können natürlich bereichsweise die Wellungen entsprechend ausgebildet sein bzw. bereichsweise vollkommen glatt ausgebildet sein, um die Flexibilität des erfindungsgemäßen Kunststoffwellrohres nicht unnötig einzuschränken.

Zum Verschließen des Längsschlitzes können andererseits auch an einem Randbereich im Überlappungsbereich Widerlager wenigstens abschnittsweise ausgebildet sein, während an dem gegenüberliegenden Randbereich ein Eingriffsbereich vorgesehen sein kann, der mit dem Widerlager in Eingriff tritt, um das Wellrohr mit Merkmalen nach der Erfindung nachhaltig zu verschließen. Für eine derartige Anordnung eignen sich besonders die Wellentäler, um zu vermeiden, daß das Wellrohr mit Merkmalen gemäß der Erfindung bereichsweise unnötige Erstreckungen hat.

Ferner ist es von Vorteil, wenn die Eingriffsbereiche nicht über den vollen Zwischenraum zwischen zwei Wellenbergen erstreckt sind, so daß die Eingriffseinrichtung, die mit dem ihr zugeordneten Widerlager im Eingriff ist, zwar in Umfangsrichtung nicht geöffnet werden kann, jedoch in Axialrichtung ein Spiel ermöglicht, so daß durch die beispielsweise als Schnapphaken ausgebildete Verschlußmöglichkeit für den Längsschlitz des Wellrohres keine übermäßige zusätzliche Versteifung des Wellrohres auftritt, so daß es zusätzlich an Flexibilität gewinnt.

Damit die Randbereiche leichter miteinander in Eingriff gebracht werden können und damit die Anbindungsbereiche zwischen den Randbereichen und dem verbleibenden Restumfang eines Wellrohres mit Merkmalen nach der Erfindung nicht übermäßig beim Verschließen des Längsschlitzes beansprucht werden können, ist es von Vorteil, wenn wenigstens einer der Randbereiche wenigstens bereichsweise über eine Schwächungslinie bzw. eine filmscharnierartige Verbindung an dem Wellrohr sitzt. Auf diese Weise ist es möglich, wenigstens den Teil eines Randbereiches ohne großen Kraftaufwand, reversibel und ohne die Gefahr einer Beschädigung so zu verformen, daß dieser Randbereich mit dem gegenüberliegenden Randbereich verbunden werden kann. Das Rohr kann je nach Material und Ausführung über Schaniere, Aussparungen, Einkerbungen entlang des Umfanges verfügen bzw. geschwächt sein um ein leichtes einlegen der Kabel ohne Beschädigung zu ermöglichen. Somit werden die Öffnungskräfte vermindert.

Um die Flexibilität insbesondere während des Verbindungsvorganges, bei dem die gegenüberliegenden Randbereiche überlappend miteinander verbunden werden, zu verbessern, können auch beide Randbereiche wenigstens bereichsweise über eine filmscharnierartige Verbindung an dem Restumfang des Wellrohres sitzen.

Da das Wellrohr im geschlossenen Zustand rund ausgebildet sein sollte, kann es von Vorteil sein, wenn das Wellrohr im Querschnitt einen Umfangsbereich von mehr als 360° aufweist, wenn es in seinen Zustand mit geöffnetem Längsschlitz vorliegt. Dabei kann das Wellrohr so hergestellt werden, daß es in dem Zustand mit mehr als 360° Umfangsbereich, d.h. mit geöffnetem Längsschlitz, in entspanntem bzw. spannungsfreiem Zustand ist, so daß es während der Überlappung der Randbereiche, d.h. mit geschlossenem Längsschlitz, in einem verspannten Zustand ist, so daß die Verschlußeinrichtungen, beispielsweise Schnapphaken oder dergleichen, in ihren geschlossen Zustand vorgespannt sind. Die Verschlußeinrichtungen, insbesondere Schnapphaken oder dergleichen, können in diesem Zustand nur schwerlich unbeabsichtigterweise geöffnet werden.

Um ein Wellrohr aus Kunststoff mit Merkmalen nach der Erfindung in bestimmten Einbaulagen, beispielsweise in einem Kraftfahrzeug am Rahmen, dem Chassis oder der Karosserie befestigen zu können, kann am Außenumfang des Wellrohres vorteilhafterweise ein Eingriffsbereich vorgesehen sein, etwa eine Einschnürung oder dergleichen, der z.B. am Wellenberg vorgesehen sein kann, und mit einer Befestigungseinrichtung, etwa einem Montageklipp oder dergleichen, in Eingriff treten zu können. Die Befestigungseinrichtung kann beispielsweise ein teilkreisförmiges Gebilde sein, an dessen Ende runde oder hakenförmige Vorsprünge angeordnet sein können, die mit einem oder mehreren Eingriffsbereichen am Außenumfang des Wellrohres in einen Schnappeingriff bringbar sind, indem beispielsweise diese Art von Befestigungseinrichtung von außen auf den Wellrohrumfang aufgeklipst wird. Die Befestigung kann sich über mehrere Wellenberge erstrecken um höhere Befestigungskräfte zu realisieren.

Umgekehrt kann das Wellrohr aus Kunststoff mit Merkmalen gemäß der Erfindung an seinen Außenumfang auch wenigstens eine, vorzugsweise zwei Erstreckungen aufweisen, die mit einer Befestigungseinrichtung mit entsprechenden Ausformungen in Eingriff bringbar sind. Dabei können beispielsweise an den Wellenbergen des Wellrohres mit Merkmalen nach der Erfindung Warzen ausgebildet sein, die in entsprechende Rahmen der Befestigungseinrichtung formschlüssig eingesetzt werden können, wobei ein elastischer Bügel zwischen den den vorzugsweise zwei Erstreckungen zugeordneten Rahmen vorgesehen ist.

Die beiden beschriebenen Befestigungsanordnungen können dabei so am Außenumfang positioniert sein, daß sie einen Beitrag dazu liefern, den Längsschlitz im geschlossenen Zustand zu halten. Das heißt, eine Erstreckung bzw. Einschnürung ist auf der einen Seite des Längsschlitzes vorgesehen, während die andere Erstreckung bzw. Einschnürung auf der anderen Seite des Längsschlitzes angeordnet ist. Auf diese Weise kann der Bügel der Befestigungseinrichtung zur Stabilisierung des Längsschlitzes und damit des gesamten Kunststoffwellrohres mit Merkmalen gemäß der Erfindung beitragen.

Natürlich können die Befestigungsanordnungen, d.h. die Einschnürungen und Erstreckungen, auch getrennt von dem Längsschlitz vorgesehen werden.

Falls vorteilhafterweise das erfindungsgemäße Kunststoffwellrohr mit einem hohen Maß an Dichtigkeit entlang seines Längsschlitzes ausgestattet werden soll, kann wenigstens einer der Randbereiche in dem Überlappungsbereich mit einer vorzugsweise in Längsrichtung durchgehenden Beschichtung versehen werden, um den Längsschlitz zu dichten. Da sich derartige Beschichtungen vergleichsweise leicht und flächendeckend selbst über die Wellungen eines Wellrohres aufspritzen lassen, kann mit hoher Wahrscheinlichkeit sichergestellt werden, daß die Dichteigenschaft entlang des Längsschlitzes dauerhaft bereitgestellt werden kann. Da es hier dauerelastische Materialien in vielfältiger Weise gibt, die auch dem Fachmann geläufig sind, ist es möglich, durch eine derartige Dichtbeschichtung keine übermäßige Versteifüng des Wellrohres mit Merkmalen gemäß der Erfindung zu verursachen. In diesem Zusammenhang kann insbesondere auf Beschichtungen aus klebrigen Gummi- oder Kunstharzen bzw. Kautschukmassen hingewiesen werden.

Anstatt die Randbereiche des Wellrohres mit Merkmalen nach der Erfindung zur Überlappung zu bringen, ist es auch vorteilhaft möglich, den Längsschlitz über ein die Randbereiche übergreifendes Element mit den jeweiligen Randbereichen zugeordneten Einfassungsbereichen abzudichten bzw. abzudecken. Dabei kann dieses Element vorteilhafterweise an den Einfassungsbereichen eine kammartige Ausbildung aufweisen, so daß es zwischen die Wellenberge der Randbereiche zu beiden Seiten hin eingreifen kann, um eine Dichtwirkung zu entfalten. Besonders vorteilhaft ist es dabei, wenn die kammartige Ausbildung an den äußeren Schenkeln der Einfassungsbereiche vorgesehen ist, die im Einbauzustand am Wellrohr außen liegen. Dieses Dichtelement kann in beiden Einfassungen mit jeweiligen Schnappeinrichtungen oder Widerlagern versehen sein, wobei die Randbereiche des Wellrohrs entsprechend mit Eingriffseinrichtungen bzw. Widerlagern versehen sind, um sowohl mechanische Festigkeit als auch Dichtigkeit bieten zu können. Falls beispielsweise dieses zusätzlich übergreifende Element aus einem vergleichsweise weichen Werkstoff, beispielsweise einem kleinporigen Schaumstoff ist, kann über dieses Element einerseits der Längsschlitz nachhaltig verschlossen werden, während andererseits die Flexibilität durch dieses Element nicht übermäßig beeinträchtigt wird.

Eine besonders vorteilhafte Ausführungsform ergibt sich, wenn wenigstens die Oberflächen der Wellungen des Außen- und/oder Innenumfangs des Wellrohrs mit einer schalldämmenden bzw. -isolierenden Beschichtung versehen werden. Diese Beschichtung kann beispielsweise von außen so aufgetragen werden, daß sie lediglich die oberen Abschnitte der Wellenberge bedeckt, so daß zwar die Kontaktschallübertragung über das Kunststoffmaterial des Wellrohres positiv beeinflußt werden kann, während jedoch keine bzw. kaum eine Versteifung des Wellrohres auszumachen ist. Entsprechend können auch die nach innen hervorstehenden Wellenberge, die radial nach außen als Wellentäler zu erkennen sind, mit einer entsprechenden schalldämmenden bzw. -isolierenden Beschichtung versehen werden. Diese Beschichtungen können bspw. von außen oder innen vor oder nach dem Korrugator, der die Wellungen ausbildet, aufgetragen werden. Hier kommen als Beschichtungsmaterialien etwa Schaumstoffe in Betracht, die selbst dann, wenn sie in einem gewissen Umfang in die jeweiligen Wellentäler eingespritzt werden sollten, keinen nennenswerten Widerstand gegen eine Verbiegung des Wellrohres mit Merkmalen gemäß der Erfindung entgegenzusetzen hat. Es ist auch möglich durchgehende Kunststoffschaumschichten für das Rohr bspw. durch Auftragen, Überstülpen eines fertigen Schlauches oder durch Einziehen eines fertigen Schlauches aus Schaumstoff vorzusehen.

Nachfolgend wird die Erfindung unter Bezugnahme auf bevorzugte Ausführungsformen näher erläutert, wobei weitere Merkmale, Vorteile und Aufgaben gemäß der Erfindung auch unter Bezug auf die beigefügten Darstellungen offenbart werden, in denen:
- Fig. 1: eine perspektivische Ansicht eines Abschnittes eines Wellrohres mit Merkmalen gemäß der Erfindung ist;
- Fig. 2: einen Längsschnitt durch einen zur Überlappung gebrachten Randbereich eines Wellrohres gemäß Fig. 1 in verschlossenem Zustand zeigt;
- Fig. 3: eine weitere Ausführungsform im Querschnitt mit einer Verschlußeinrichtung zeigt;
- Fig. 3a: die Ausführungsform gemäß Fig. 3 mit zusätzlichen Montageerstreckungen zeigt;
- Fig. 4a-4d: eine weitere Ausführungsform in querschnittlichen Darstellungen im Verlauf einer Verschlußaktion für den Längsschlitz zeigen;
- Fig. 5: eine weitere Ausführungsform gemäß der Erfindung im Querschnitt nebst einer Montageeinrichtung zeigt;
- Fig. 6: eine weitere Ausführungsform gemäß der Erfindung mit einer dichtenden Beschichtung im Überlappungsbereich im Querschnitt zeigt; und
- Fig. 7: eine weitere Ausführungsform eines Wellrohres im Querschnitt mit einem übergreifenden Element mit Einfassungsbereichen zeigt.

In den Darstellungen sind gleiche oder wenigstens funktionsgleiche Bestandteile mit gleichen bzw. entsprechenden Bezugszeichen benannt worden, wobei von Ausführungsform zu Ausführungsform die zugeordneten Bezugszeichen um Dekaden erhöht worden sind (12 entspricht 112 entspricht ... entspricht 512).

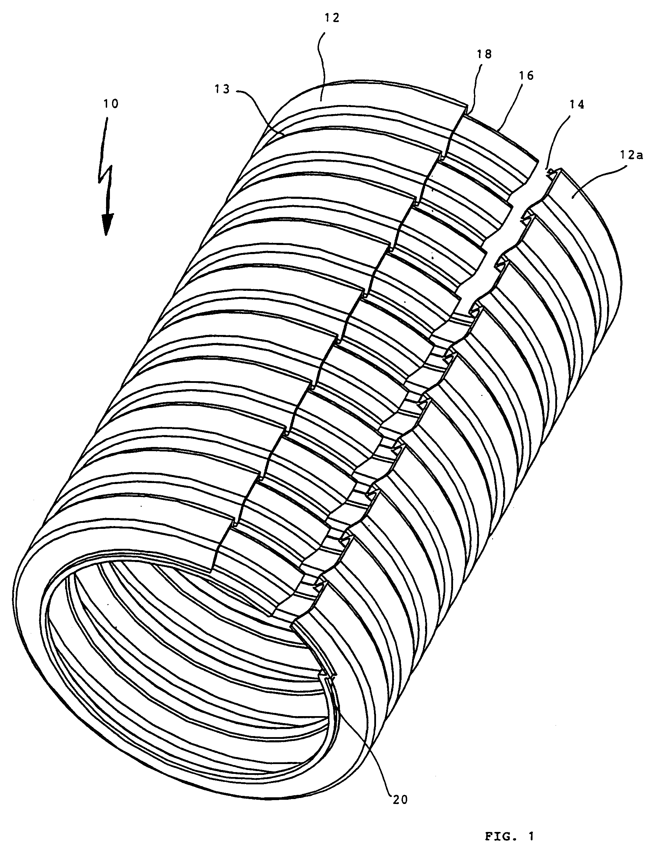

Die Fig. 1 zeigt eine Ausführungsform 10 eines Wellrohres aus Kunststoff mit Merkmalen gemäß der Erfindung. Das Wellrohr 10 weist Wellungen 12 auf, die Wellenberge 12a und Wellentäler 13 umfassen. In einem Überlappungsbereich 16 sind die Wellenberge bzw. Wellentäler der Wellungen kleiner ausgebildet, so daß sie mit den Wellenbergen 12a und Wellentälern 13 des gegenüberliegenden Randes an dem Längsschlitz 14 in einen überlappenden Eingriff gebracht werden können.

Dabei sind wenigstens einige gruppenweise beabstandete oder einzeln beabstandete Wellungen in dem Überlappungsbereich 16 mit Ausformungen versehen (nicht dargestellt), die es ermöglichen, daß die besagten Ausformungen (nicht gezeigt) mit komplementären Ausbildungen an dem gegenüberliegenden Randbereich in einen Eingriff gelangen, der wenigstens in Umfangsrichtung einen Widerstand bietet, so daß ein einmal geschlossener Längsschlitz 14 nur durch radiales Entfernen des dem Bezugszeichen 12a zugeordneten Randbereiches von dem dem Überlappungsbereich zugeordneten Randbereich wieder geöffnet werden kann bzw. überhaupt nicht mehr geöffnet werden kann.

Um den Überlappungsbereich genau festzulegen, kann ein in Längsrichtung wenigstens bereichsweise vorgesehener Anschlag 18 vorgesehen werden, mit dem die Stirnflächen des dem Bezugszeichen 12a zugeordneten Randbereiches in Anlage gebracht werden können. Der Durchmesser des geschlossenen Wellrohres mit Merkmalen nach der Erfindung kann damit exakt definiert werden. Ferner ist es möglich, daß auf diese Weise die Lage von Verschlußeinrichtungen zum Verschließen des Längsschlitzes exakter vorgegeben werden kann. Durch diesen Anschlag erhält der Außendurchmesser eine Eigenstabilität, so daß außengreifende Zubehörteile eingesetzt werden können, ohne daß es zu einer Querschnittsverengung des Wellrohres kommt. Die Erstreckung des Überlappungsbereiches 16 in Umfangsrichtung entspricht der Erstreckung des Überlappungsbereiches bis zu dem durch das Bezugszeichen 20 gekennzeichneten Einschnitt, der vorteilhafterweise so ausgebildet ist, daß der Innenumfang des Wellrohres 10 im geschlossenen Zustand des Wellrohres keinen Sprung aufweist. Ansonsten könnten Vibrationen beispielsweise in einem Kraftfahrzeug dazu führen, daß die Isolation von elektrischen Kabeln beschädigt wird.

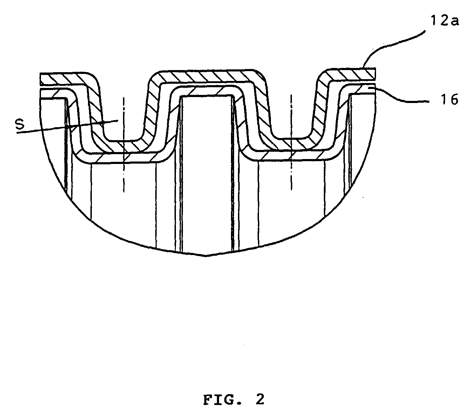

In Fig. 2 ist ein Längsschnitt durch eine Seite des Wellrohres gemäß Fig. 1 im geschlossenen Zustand wiedergegeben. Im Überlappungsbereich 16 liegen die Randbereiche 16, 12a entlang des ehemaligen Längsschlitzes aufeinander.

Damit durch den Überlappungsbereich die Flexibilität des Wellrohres 10 gemäß der Erfindung nicht eingeschränkt wird, kann ein Spiel s zwischen den Wellungsflanken und den Wellungsbergen zur Verfügung gestellt werden. Das Spiel zwischen den Wellungsflanken kann dabei geringer sein als das Spiel zwischen den Wellungsbergen. In den Wellentälern können die Wellungen im Überlappungsbereich der ehemaligen Randbereiche des Wellrohrs 10 direkt aufeinanderliegen.

Umgekehrt kann das Spiel auch zwischen den Flanken der Wellungen und zwischen den Wellungstälern vorgesehen sein, während die Wellungsberge aufeinander aufliegen. In beiden Fällen wird die Flexibilität des erfindungsgemäßen Wellrohres nur geringfügig durch den Überlappungsbereich der beiden Randbereiche 16, 12a beeinträchtigt.

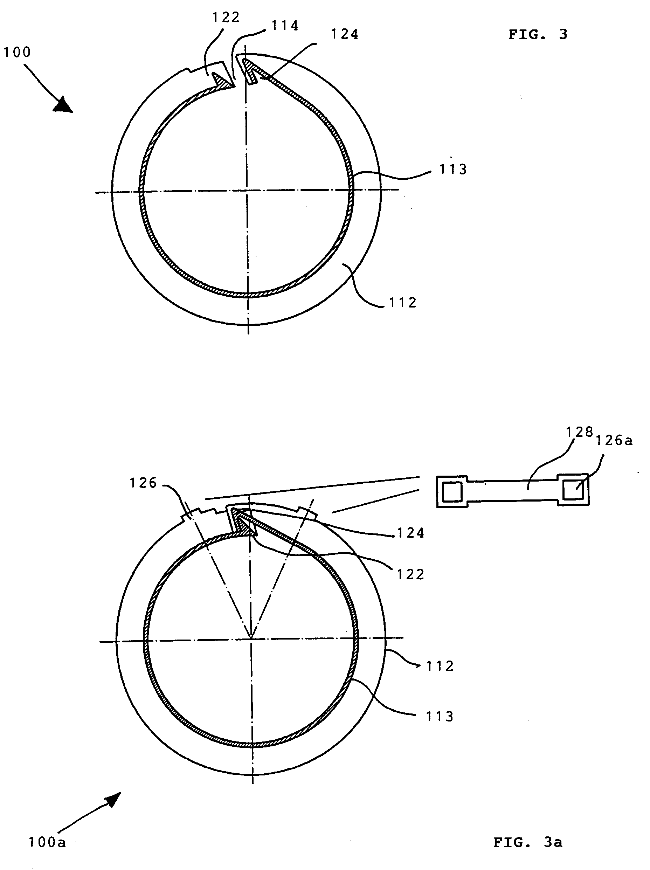

Die Ausführungsform eines Wellrohrs 100 gemäß Fig. 3 zeigt zum Verschließen des Längsschlitzes 114 ein Widerlager 122 und eine Eingriffseinrichtung 124. Die als Schnapphaken 124 ausgebildete Eingriffseinrichtung kann durch Zusammendrücken des Wellrohres mit dem Widerlager 122 in Eingriff gebracht werden, so daß der Längsschlitz damit überlappend verschlossen ist. Um das Wellrohr nach außen im geschlossenen Zustand als rund auftreten zu lassen, ist es von Vorteil, wenn das Widerlager 122 und der Schnapphaken 124 als Fortsetzung des Wellentals 113 und nicht des Wellenberges 112 ausgebildet sind.

Die Ausführungsform eines Wellrohres 100a mit Merkmalen nach der Erfindung gemäß Fig. 3a zeigt zusätzlich gegenüber der Ausführungsform 100 Erstreckungen 126 am Außenumfang des Wellrohres, d.h. hier an den Wellenbergen 112. Die als rechteckige Warzen ausgebildeten Erstreckungen 126 können mit einem Befestigungselement mit einem der Rundung des Wellrohres angepaßten Bügel 128 und zugehörigen Einfassungen 126a in Wechselwirkung treten, um einerseits das Wellrohr beispielsweise in einem Kraftfahrzeug oder einem Kabelschacht oder dergleichen an einem bestimmten Ort festlegen zu können bzw. um andererseits den Längsschlitz 114 in der Verschlußstellung zu halten.

Das Element 128 kann auch als Ersatz für die Verschlußanordnung 122, 124 verwendet werden, so daß zwar eine Überlappung der Randbereiche bereitgestellt werden kann, wie dies aus den Fig. 1 und 2 ersichtlich ist, jedoch anstelle des Zusammenspiels zwischen einem Schnapphaken 124 und einem Widerlager 122 lediglich das Zusammenwirken zwischen den Erstreckungen 126 und den Einfassungen 126a des Befestigungselementes 128 eingesetzt wird.

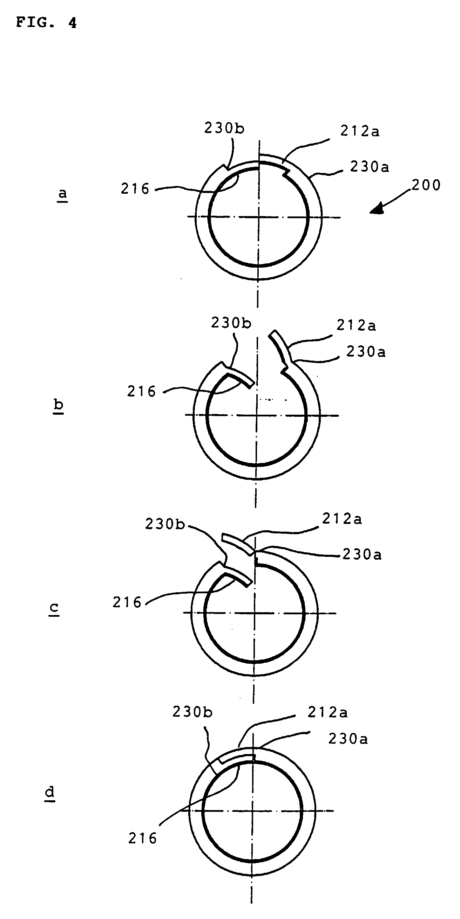

Aus Fig. 4 ist eine weitere Ausführungsform eines Wellrohrs 200 ersichtlich. Dieses Wellrohr 200 weist wiederum Randbereiche 216, 212a auf, die in dem Bereich 216 zur Überlappung zu bringen sind. Die Randbereiche sind über jeweilige Filmscharniere 230b, 230a an dem Restumfang des Wellrohres 200 befestigt, so daß die Randbereiche 216, 212a leicht verschwenkt werden können. Das Auseinanderschwenken und Zusammenschwenken in die Stellung, bei der der Längsschlitz verschlossen ist, wird durch die Fig. 4b bis 4d dargestellt.

Natürlich kann auch nur einer der Randbereiche verschwenkbar sein, während der andere nur im Rahmen der Materialelastizität des Wellrohres radial verschwenkbar ist.

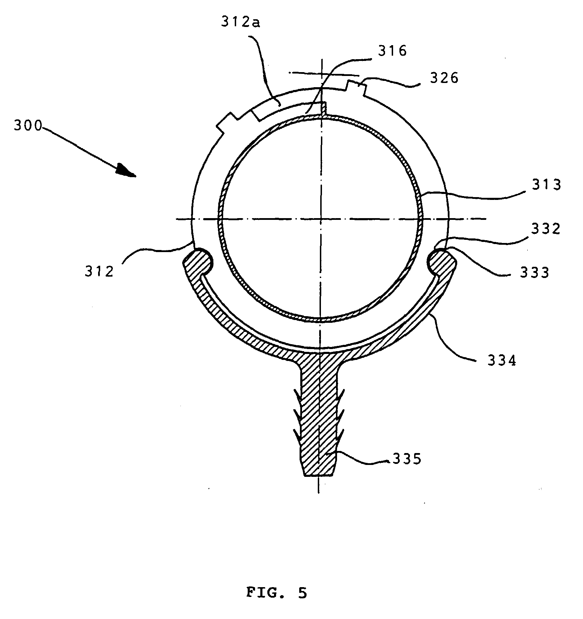

Aus Fig. 5 ist eine weitere Ausführungsform eines Wellrohrs 300 mit Merkmalen gemäß der Erfindung ersichtlich. Am Außenumfang weist dieses Wellrohr Einschnürungen 332 auf, die bevorzugt axialsymmetrisch angeordnet sind. Ein Befestigungselement, hier ein Montageklipp 334, kann über Erstreckungen 333 mit den Einschnürungen 332 in Eingriff gebracht werden, um das Wellrohr 300 festzuhalten. Der Montageklipp 334 kann sodann über einen bolzen- bzw. dübelartigen Fortsatz 335 beispielsweise an einer Automobilkarosserie festgelegt werden.

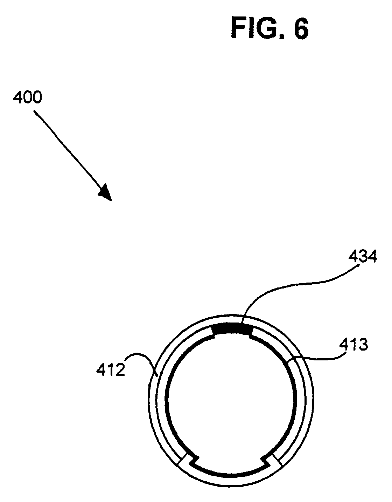

Gemäß Fig. 6 wird in dem Überlappungsbereich entlang des Längsschlitzes bzw. des verschlossenen Längsschlitzes wenigstens auf einen der beiden zur Überlappung gebrachten Randbereich eine Beschichtung 434 aufgetragen. Sobald die Randbereiche zur Überlappung gebracht worden sind, sorgt die vorzugsweise in Längsrichtung durchgehende Beschichtung 434 dafür, daß der ehemalige Längsschlitz wenigstens gegenüber Spritzwasser abgedichtet ist. Die aufzutragende Beschichtung kann dabei dauerelastisch und eventuell klebrig sein, um einerseits die gewünschte Abdichtung in einem akzeptablen Maße zur Verfügung zu stellen und um andererseits bei einer Verbiegung des Rohres die Flexibilitätseigenschaft des Wellrohres 400 nicht übermäßig einzuschränken.

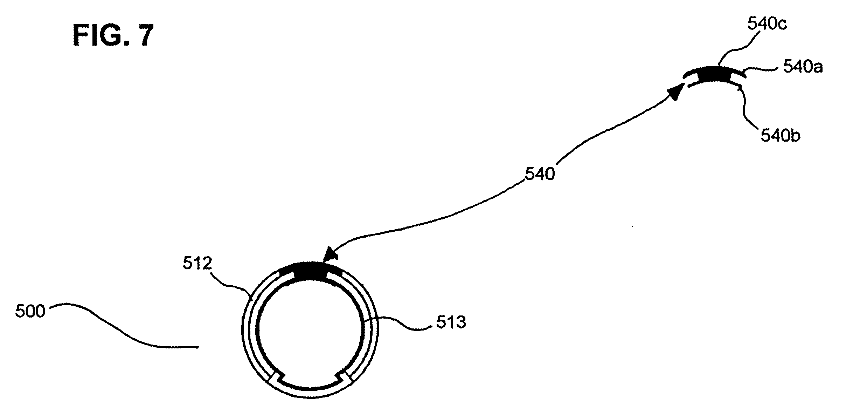

Die Ausführungsform gemäß Fig. 7 zeigt ein Wellrohr 500, bei dem der Längsschlitz durch ein übergreifendes Element 540 verschlossen wird. Das übergreifende Element 540 greift hierbei zwischen die Wellentäler kammartig ein, wobei kammartige Zähne lediglich an dem Oberteil 540a der aus den Schenkeln 540a, 540b ausgebildeten Einfassungsbereichen vorgesehen sind, damit sich die Zähne in das Wellental einlegen können.

## Patentansprüche

1. Kunststoffwellrohr mit einem Längsschlitz bzw. einer in Längsrichtung des Rohres erstreckten, im wesentlichen durchgehenden Öffnung, dadurch **gekennzeichnet**, daß die einander gegenüberliegenden Randbereiche (16, 12a) wenigstens abschnittsweise so ausgebildet sind, daß sie miteinander verbindbar sind.

2. Kunststoffwellrohr nach Anspruch 1, dadurch **gekennzeichnet**, daß wenigstens einige Wellungen (12) eines Randbereiches (16, 12a) so ausgebildet sind, daß diese von oben oder von unten mit den Wellungen des gegenüberliegenden Randbereiches zum Eingriff bringbar sind, wobei sich bevorzugt die Wellungen eines Randbereiches zum Rand hin verengen, während die Wellungen des gegenüberliegenden Randbereiches komplementär ausgebildet sind.

3. Kunststoffwellrohr nach einem der Ansprüche 1 oder 2, dadurch **gekennzeichnet**, daß die Wellungen bzw. Wellentäler (13) der Wellungen des einen Randbereiches (16) wenigstens bereichsweise mit Widerlagern (122, 126) ausgebildet sind, während die Wellungen bzw. Wellentäler des anderen Bereiches entsprechend mit Eingriffsbereichen (124), etwa Schnapphaken, ausgebildet sind, damit das Rohr wenigstens bereichsweise schließbar ist, wobei bevorzugt zwischen den Ausformungen der ineinandergreifenden Wellungen der beiden Randbereiche wenigstens abschnittsweise eine Toleranz gelassen ist, so daß die Versteifung der überlappenden Randbereiche minimal ist.

4. Kunststoffwellrohr nach einem der Ansprüche 1 bis 3, dadurch **gekennzeichnet**, daß wenigstens einer der Randbereiche wenigstens bereichsweise über eine filmscharnierartige Verbindung (230a, 230b) an dem Wellrohr (200) sitzt.

5. Kunststoffwellrohr nach einem der Ansprüche 1 bis 4, dadurch **gekennzeichnet**, daß das Wellrohr an seinem Außenumfang einen Eingriffsbereich, etwa eine Einschnürung (332), bevorzugt am Wellenberg (312) aufweist, beispielsweise, um mit einer Befestigungseinrichtung (334), etwa einem Montageklipp oder dergleichen, in Eingriff zu treten, oder daß das Wellrohr an seinem Außenumfang wenigstens eine Erstreckung (326) aufweist, die mit einer Befestigungseinrichtung (128) mit entsprechender Ausformung (126a) in Eingriff bringbar ist, wobei bevorzugt jeweils zwei Erstreckungen auf bestimmten Wellenbergen des Wellrohres vorgesehen sind, die in umgreifende Ausformungen (126a) einer Befestigungseinrichtung, bevorzugt einer Haltespange (128), aufnehmbar sind.

6. Kunststoffwellrohr nach einem der Ansprüche 1 bis 5, dadurch **gekennzeichnet**, daß wenigstens einer der Randbereiche (16, 12a) in dem Überlappungsbereich mit einer vorzugsweise in Längsrichtung durchgehenden Beschichtung (434) versehen ist, um den Schlitz (14) zu dichten, wobei die Beschichtung insbesondere dauerelastisch und vorzugsweise eine klebrige Gummi- oder Kunstharz- bzw. Kautschukmasse ist.

7. Kunststoffwellrohr nach einem der Ansprüche 1 bis 6, dadurch **gekennzeichnet**, daß der Längsschlitz über ein die Randbereiche übergreifendes Element (540) mit den jeweiligen Randbereichen zugeordneten Einfassungsbereichen (540a, 540b) abgedeckt bzw. abgedichtet ist, wobei bevorzugt das Element (540) an den Einfassungsbereichen eine kammartige Ausbildung aufweist.

8. Kunststoffwellrohr nach Anspruch 7, dadurch **gekennzeichnet**, daß die kammartigen Ausbildungen an den äußeren Schenkeln (540a) der Einfassungsbereiche vorgesehen sind, die im Einbauzustand am Wellrohr außen liegen.

9. Kunststoffwellrohr nach einem der Ansprüche 7 oder 8, dadurch **gekennzeichnet**, daß die kammartigen Ausbildungen zwischen die Wellentäler/-berge des Wellrohres eingreifen.

10. Kunststoffwellrohr nach einem der Ansprüche 1 bis 9, dadurch **gekennzeichnet**, daß wenigstens die Oberflächen der Wellenberge des Außen- oder Innenumfangs des Wellrohres mit einer schalldämmenden bzw. -isolierenden Beschichtung versehen sind.
